# EUROPEAN PATENT APPLICATION

(11) **EP 4 653 124 A2**
(43) Date of publication of application: **26.11.2025**
(21) Application number: 25199624.5
(22) Date of filing: 25.10.2022
(51) Int. Cl.: B23K 26/14

(54) **LASER DEVICE AND METHOD FOR LASER CLEANING A SURFACE**

(30) Priority: 25.10.2021 NL 2029505
(62) Divisional of application: 22805885.5
(71) Applicant: P-Laser N.V., 3550 Heusden Zolder (BE)
(72) Inventor: PHILIPPRON, Jean Claude Marie, 3550 ZOLDER (BE)
(74) Representative: EP&C

(57) **Abstract**

There is provided a laser device for laser cleaning a surface. The laser device comprises a laser head and a tube. The tube comprises an inner cross-section, a laser opening and an extraction opening. The laser head is adapted to direct a laser beam via a laser beam path to the surface. The laser beam path extends from the laser head through the inner cross-section to the laser opening. The tube forms a gas flow path from the laser opening to the extraction opening through the inner cross-section. The laser head is adapted to fill an inner volume extending across the inner cross-section with the laser beam. The tube is adapted to guide gas along the gas flow path through the inner volume.

## Description

The present invention relates to the technical field of laser devices, in particular for cleaning a surface. Further, the present invention relates to a method for laser cleaning a surface with a laser device.

Laser cleaning is a well-known method for cleaning surfaces. A surface may accumulate contamination over time, such as dirt or an oxidation layer. A surface may have a coating which has deteriorated over time to the extent a new coating on the surface is desired. To apply the new coating, first the deteriorated coating needs to be removed. The deteriorated coating is then considered to be contamination.

To remove the contamination, a laser device is used. The laser device directs a laser beam onto the surface. The laser beam irradiates the contamination on the surface and causes a reaction with the contamination. The reaction causes particles of the contamination to be released from the surface. The irradiation of the laser beam is continued till sufficient particles have been removed from the surface, and the surface is considered clean.

However, the released particles are hazardous when the laser device removes contamination from surfaces containing heavy metallic-based coatings, e.g. chromate-based paint coatings. The released particles are for example highly toxic. For example, in the case of a chromate-based coating, the released particles include hexavalent chromium particles (Cr(VI)) bounded to organics or other elements which are designated as very harmful. During cleaning of the surface, most of the released particles propagate towards the laser device. A significant portion of the toxic particles stick at the edge of the laser device, leading to health hazard.

Document US2011/0253687 reduces the hazard by providing a curved profile at the edge of the laser device. Such curved profile improves the flow of particles into the laser device. A disadvantage of US2011/0253687 is that the hazardous particles are still present inside the laser device, and these hazardous particles are extracted from the laser device. This imposes safety issues.

It is desired to reduce the hazard of laser cleaning.

It is an object of the invention to provide an improved laser device and a method for the use of a laser device, or at least provide an alternative to the known laser devices. In particular, it is an object of the invention to provide a safer laser device.

This object is achieved with a laser device for cleaning a surface, the laser device comprising:
a laser head, and
a tube comprising an inner cross-section, a laser opening and an extraction opening, wherein the laser head is adapted to direct a laser beam via a laser beam path to the surface, wherein the laser beam path extends from the laser head through the inner cross-section to the laser opening,
wherein the tube forms a gas flow path from the laser opening to the extraction opening through the inner cross-section,
wherein the laser head is adapted to fill an inner volume extending across the inner cross-section with the laser beam,
wherein the tube is adapted to guide gas along the gas flow path through the inner volume.

The laser device directs via a laser head a laser beam to the surface. The laser beam incident on the surface causes particles to be released from the surface. The released particles flow via a gas flow path through an inner volume. In the inner volume, the particles in the flow of gas are heated by the energy of the laser beam. This heat causes the reduction of the particles, which means that the oxidation state of the particles is reduced to a lower state. The reduced particles are extracted from the laser device. The reduced particles have improved properties relating to safety, e.g. toxicity. The laser device according to the invention is thus safer compared to known laser cleaning devices.

The invention relates to a laser device for cleaning a surface, which is optionally a portable laser cleaning device for manual use. The laser device comprises a laser head and a tube. The laser head may comprise a laser source, which is configured to emit a laser beam. Alternatively, the laser head is connectable to a laser source. The laser head receives the laser beam from the laser source. The laser source is for instance configured to emit radiation in the infrared spectrum. The laser beam may comprise one or more laser beams, for instance in a predetermined shape, for instance a round or square laser beam.

The tube comprises an inner cross-section, a laser opening and an extraction opening. During the laser cleaning operation, the laser opening is faced opposite to the surface to be cleaned. The extraction opening is, for instance, connected to a gas extraction system, e.g. a pump or compressor, which is configured to generate an underpressure at the extraction opening. The extraction opening is for example configured to remove contaminants from the surface, wherein the contaminants are detached from the surface, for example, by means of the laser beam.

The laser head is adapted to direct the laser beam via a laser beam path to the surface. The laser beam path extends from the laser head through the inner cross-section to the laser opening. The laser beam path is the trajectory the laser beam travels through the tube. The inner cross-section of the tube is, for example, a circular, oval, or square cross-section. For example, the tube may have a conical shape wherein the inner cross-section is circular.

The laser head is adapted to fill an inner volume extending across the inner cross-section with the laser beam. The inner volume is a volume inside the tube in which the laser beam heats the particles in the flow of gas. The inner volume is filled, for example, by a laser beam having a cross-section that is the same as a cross-section of the inner volume. In another example, the inner volume is filled by a laser beam that has a smaller cross-section than the cross-section of the inner volume. The laser beam is rapidly moved along the cross-section of the inner volume. The movement of the laser beam along the cross-section of the inner volume is substantially faster than a movement of the particles along the gas flow path. For example, the laser beams moves back and forth along the entire cross-section of the inner volume with a frequency between 80-120 Hz, for example 100 Hz. Due to the rapid movement of the laser beam, the inner volume seems continuously filled with the laser beam for a particle flow along the gas flow path. As a result, the particles in the inner volume are heated by the laser beam, even if a particle is not directly irradiated by the laser beam. For example, the laser head is adapted to fill the inner volume with the laser beam to create a temperature of at least 400°C along the inner volume. For example, the entire inner volume has the temperature of at least 400°C. In example, the inner volume is filled by a laser beam comprising two or more laser beams.

The tube will be warmed up by the emitted laser beam. When the inner volume is filled with the laser beam, it is possible to keep a safety distance between the inner volume and a wall of the tube. The safety distance limits the heating of the tube by the laser beam, because the safety distance prevents that the edge of the tube is directly irradiated by the laser beam. For example, the safety distance between the inner volume and a wall of the tube is in the range of 0.1 - 5.0 mm, for example 0.5 - 2.0 mm, for example 1.0 mm. The safety distance in this range helps to prevent excessive heating of the tube by the laser beam, while ensuring that the tube is able to guide the gas with the particles through the inner volume. In comparison, an extremely large safety distance would cause many particles to flow pass the inner volume. In case of an extremely large safety distance, the oxidation state of those particles would not be reduced in the inner volume. The inner volume is, for example, long enough along the laser beam path to ensure that particles in the flow of gas are guided by the tube through the inner volume sufficiently long to reduce the particles.

The terms 'reduce', 'reduced' and 'reduction' used in this text refer to an oxidation state of particles, not necessarily to a number of particles. Reduction is a physical process opposite to oxidation.

The laser beam may cause various physical processes. Under influence of the laser beam, particles are detached from the surface. These particles include for example pure metal particles, e.g. hexavalent chromium particles, or metal particles with organic and/or anorganic fractions sticked to the metal particles. The organic fractions around the metal particle thermally isolate the metal particle to a certain extend. This prevents a proper reduction of the metal particle, e.g. a hexavalent chromium particle. The laser beam further at least mitigates this issue. The laser beam causes heating inside the tube, and more particularly inside the inner volume. The heat burns away most of the organic fractions of the particles, while the particles are flowing through the inner volume. This exposes the metal particles to the radiation and/or heat of the laser beam.

Under influence of the thermal effect induced by the laser radiation heat, the oxidation state of the metal oxide particles can be reduced to an oxidation state for example having non-toxic or less toxic properties. The reduced particles are less hazardous. For example, the toxic hexavalent chromium (Cr(VI)) can be reduced to the trivalent state (Cr(lll)) under the presence of high temperatures, e.g. temperatures of above 400 °C. Cr(lll) and Cr(VI) are two oxidation states of Cr with considerably different chemical and environmental properties. Note that throughout the description, the term hexavalent chromium refers to the notation Cr(VI) and that trivalent chromium refers to the notation Cr(III). The presence of a laser radiation field facilitates the reduction of the metal oxide particles, wherein the particles are subjected to the irradiation of the laser beam.

The tube forms a gas flow path from the laser opening to the extraction opening through the inner cross-section. The tube is adapted to guide gas along the gas flow path through the inner volume. The gas, e.g. an air stream, enters the tube at the laser opening which is guided via the gas flow path to the extraction opening. The gas flow rate or flux is, for example, regulated by adjusting the extraction rate at the extraction opening. Preferably, the gas flow rate is between 3000-5000 litres/min.

In an embodiment, the laser head is adapted to fill the inner cross-section with the laser beam. In this embodiment, there is no safety distance between the inner volume and the edge of the tube. The inner volume is directly adjacent a wall of the tube. The inner volume extends, for example, across the entire inner cross-section. Consequently, any particle released from the surface that flows along the gas flow path towards the extraction opening, flows through the inner volume. This helps to further improve the safety, because the oxidation states of more particles are reduced.

In an embodiment, the tube comprises a turbulator. The turbulator is adapted to increase a turbulence of the gas along the gas flow path. The turbulator influences the gas flow path by disturbing the gas flow field via the increased turbulence. The metal oxide particles flowing along the gas flow path experience the turbulence, resulting in a spinning movement of the particles inside the tube. The particles will circulate inside the tube. The increased turbulence extends the residence time of the particles inside the tube. Extending the residence time increases the efficacy to sufficiently warm up the metal oxide particles under influence of the laser beam from the laser head. Further, in case a safety distance is present between the inner volume and the wall of the tube, the turbulator helps to guide the particles in the gas through the inner volume. Due to the increase in turbulence caused by the turbulator, particles are less likely to remain close to the wall of the tube while the particles flow along the gas flow path. The particles are less likely to stick on the wall of the tube. The increased turbulence moves particles away from the wall and into the inner volume. The turbulator allows a larger safety distance, which reduces heating of the tube by the laser beam.

In a further embodiment, the turbulator is arranged between the laser opening and the inner cross-section. The turbulator creates a zone of turbulence that is large enough to ensure sufficient turbulence. Because the turbulator is arranged between the laser opening and the inner cross-section, the turbulence of the gas in the inner volume is increased to improve the reduction of the oxidation state of the particles in the gas.

In an embodiment, the turbulator comprises protrusions and/or ridges. The protrusions and/or ridges are arranged along the gas flow path. Preferably, the protrusions and/or ridges are oriented towards the gas flow path. The flow of gas passes along the profile of the turbulator, wherein the protrusions and/or ridges increase the turbulence of the present flow field. A turbulent flow field is formed. When the particles displaced along the gas flow path enters the turbulator via the laser opening, the particles are not moving in a linear laminar flow towards the extraction opening. The particles, when subjected to the turbulent flow field, will generally make a spinning movement inside the turbulator. Hence, the hit chance of the radiation of the laser beam incident on the surface of each particle is enhanced.

In an embodiment, the extraction opening is arranged at a distance from the laser opening. The laser head is adapted to fill the inner volume defined by the inner cross-section and the distance with the laser beam. For example, the inner volume has a tapered shape or a conical shape or a cylindrical shape or a cubical shape. The laser device is configured to bring the laser beam into focus at a focus distance after leaving the laser head. By bringing the laser beam into focus, e.g. by a lens, the irradiation of the surface is more efficient, e.g. during a cleaning operation. The distance has to be sufficient enough to form the inner volume which is, for example, long enough along the laser beam path to reduce the oxidation state of the particles. The distance between the extraction opening and the laser opening is at least 40 mm, preferable at least 50 mm, more preferably at least 60 mm.

In an embodiment, the inner volume has a tapered shape, for example a conical shape. The safety distance between the inner volume and a wall of the tube is preferably as small as possible along the tube. The particles which are flowing through the tube are less likely to escape from the inner volume without being irradiated and/or heated by the laser beam. Preferably, a wall of the tube has an equal tapered shape as the inner volume.

In an embodiment, the laser device is adapted to remove metal particles from the surface. The tube is adapted to displace the metal particles along the gas flow path. The laser head is adapted to heat and/or irradiate the metal particles in the inner volume to reduce an oxidation state the metal particles. By irradiation of the surface by the laser beam, the metal particles are detached from the surface. The metal particles for example include heavy metal oxide particles, for example hexavalent chromium particles. The surface is e.g. a painted organic coating. The metal oxide particles are bounded to organics or other elements. The tube is adapted to displace the detached metal particles along the gas flow path. The laser head is adapted to heat and/or irradiate the metal particles in the inner volume to reduce the metal particles. For example, the reduction of an oxidation state of Cr(VI) to trivalent chromium (Cr(lll)) can be accomplished at high temperatures, e.g. at least 400 degrees. Under influence of the radiation heat from the laser beam organic components bounded to the metal particles are eliminated to create pure hexavalent chromium particles. Subsequently, the oxidation state of the hexavalent chromium Cr(VI) particles are reduced to the less hazardous trivalent chromium Cr(III) particles and are extracted via the extraction opening. The laser device reduces the hazard of removing contaminants during laser cleaning.

In an embodiment, the laser device comprises a distance adjuster to adjust an adjustable distance between the laser opening and the surface. The adjustable distance ensures an advantageous gas flow in order to optimise the reduction of the oxidation state of metal particles. The distance adjuster is, for example, configured to adjust the position perpendicular to the surface of the tube relative to the surface. The distance adjuster is for example a distance wheel. The distance wheel is configured to contact the surface. The distance wheel is, for example, arrangeable at different positions along the tube corresponding to different values of the adjustable distance. Alternatively, the distance wheel can for example be replaced by another distance wheel having a different radius, e.g. a smaller radius to lower the value of the adjustable distance between the laser opening and the surface.

The desired value of adjustable distance depends on the circumference of the laser opening and the gas flow rate. By adjusting the adjustable distance to the desired value, the flow of gas near the laser opening has sufficient flow speed to prevent particles from moving away from the gas flow path. By adjusting the adjustable distance to the desired value, the flow rate of the gas along the gas flow path is adjusted to obtain a certain amount of turbulence of the gas along the gas flow path. The turbulence improves the irradiation of the particles in the flow of gas in the inner volume. In an embodiment, the adjustable distance between the laser opening and the surface is between 6-30 mm, preferably between 8-25 mm, more preferably between 15-20 mm.

In an embodiment, the laser device further comprises a gas extraction system which is connectable to the extraction opening, wherein the gas extraction system is adapted to create gas flow along the gas flow path. The laser device comprising the gas extraction system is not dependent from an external gas extraction system. The laser device is more mobile to clean for example difficult to reach surfaces. Also, it is easier to clean on site for example heavy and/or big objects, e.g. oil pipes, which are not movable.

In an embodiment, the laser device comprises a spectral sensor arranged to generate a spectral signal based on a composition of the gas along the gas flow between the inner volume and the extraction opening. The spectral sensor is arrangeable at the laser head, wherein the spectral sensor is oriented towards the surface. Since the laser beam irradiates on the surface, the energy of the laser beam causes an oxidation reaction. During this oxidation reaction, radiation is emitted from the surface. The spectral sensor is configured to detect the emitted oxidation energy from the oxidation reaction. The detected emission contains information about the components involved in the oxidation reaction. These components include elements or particles from which the surface is made, and other elements or particles present in or on the surface, for example an organic coating.

The released particles are displaced along the gas flow path. The energy of the laser beam creates a thermal effect that causes the reduction of the oxidation state of the released particles from the surface. The spectral sensor is arranged to generate a spectral signal. The spectral signal is based on a composition of the gas along the flow of gas between the inner volume and the extraction opening. The spectral signal thus contains information about the amount and the oxidation state of the particles. The spectral sensor is for example configured to detect the presence of unremoved particles of the surface. Alternatively or in addition, the spectral sensor is for example configured to detect the unreduced oxidation state of the particles inside the inner volume. The spectral sensor is for example a High Resolution spectrometer or a Raman spectrometer.

In an embodiment, the laser device further comprises at least one distance sensor to generate a distance signal based on the adjustable distance between the laser opening and the surface. The at least one distance sensor is configured to detect the adjustable distance between the laser opening and the surface. The at least one distance sensor is arrangeable at the laser opening. For example, the laser device comprises a control unit configured to receive a distance signal generated by the at least one distance sensor. The distance signal is representative of the adjustable distance between the laser opening and the surface. The control unit is configured to control the laser device for emitting the laser beam with a desired laser energy and/or laser frequency and/or focal distance towards the surface.

For example, the laser device is configured to emit a pulsed laser beam with an energy between 1-200 mJ and a frequency between 1-60 kHz if the adjustable distance for example corresponds to a predetermined distance, e.g. between 1-5 mm. For example, the control unit only allows the laser device to emit the laser beam if the signal from the distance sensor indicates that the adjustable distance between the laser opening and the surface is within a desired range. In this way, it is prevented that a laser beam is emitted when the laser device is incorrectly positioned relative to the surface. This could result in a laser beam in a direction that an operator does not expect, resulting in dangerous situations, which is prevented in this embodiment. Further, the adjustable distance guarantees that the laser device is configured to operate as a Class 1 laser, which is safe under all conditions of normal use. This means that, for example, safety glasses are not needed during use.

In an embodiment, the laser head is adapted to scan the surface with the laser beam, wherein the laser head is adapted to fill the inner volume by scanning the laser beam. The laser head is configured to direct the laser beam through a scanning pattern. The scanning pattern, for instance, comprises a relatively small scanning movement, which is hardly or not visible to the human eye. During scanning of the laser beam, the laser beam for example follows a sinusoidal scanning movement. In this way, the laser beam is not continuously on the same location of the surface, but makes a scanning movement. This ensures that not too much energy is transferred to a small part of the surface. For example, in a cleaning operation, too much energy could damage the surface instead of removing contaminants.

Further, the laser head is adapted to fill the inner volume by scanning the laser beam. The laser beam follows the scanning pattern, wherein the laser beam fills the inner volume. The scanning speed of the laser beam over the surface has to be high enough to secure a sufficient hit chance of the radiation of the laser beam incident on each particle inside the inner volume. For example, the scanning speed is in the range of 3000 - 5000 mm/s. This enhances the effectivity of irradiation of the detached particles, e.g. hexavalent chromium particles.

The scanning pattern is for example achieved by scanning the laser beam back and forth over the surface along a scanning width and/or a scanning length. During scanning of the laser beam over the scanning width and/or the scanning length, the laser beam for example does not directly contact a wall of the tube. Direct contact between the wall and the laser beam could heat up the tube rapidly. This could even result in damage of the tube. In particular, the laser device may be a handheld device, and thus a relatively hot tube is experienced as cumbersome during operation. For example, the laser beam is configured to be within the boundary of the laser opening of the tube when the laser beam passes the laser opening. For example, the laser opening may have a rectangular shape having an opening width and opening length. In particular, the scanning width and the scanning length are determined with respect to the opening width and the opening length. Preferably, the scanning width and the scanning length are smaller than the opening width and the opening length, respectively. However, it is possible in an example that the laser beam makes directly contact with the wall of the tube, e.g. when there is no safety distance between the inner volume and the edge of the tube. For example, the tube made of a material with a relatively high thermal conductivity, e.g. aluminium. The material with the high thermal conductivity transfers heat, for example, away from the tube to a heat sink. For example, the material with the high thermal conductivity transfers heat away from the tube to a cooling system. The tube is, for example, provided with a heat insulating outer surface that shields an operator from a high temperature inside the tube. For example, the tube comprises a material that is resistant against the heat from the laser beam, such as a ceramic.

The invention further relates to a method. The method according to the invention can be carried out using the laser device according to the invention. However, the method according to the invention is not limited thereto. In addition, the various features and embodiments of the laser device according to the invention, as well as the use and applications thereof, can be added to the method, even if not explicitly described with respect to that method. Also, features and components described with respect to methods can be added to the laser device according to the invention. Features, components and definitions used in relation to the method according to the invention have the same meaning as explained in relation to the laser device according to the invention, unless explicitly stated otherwise.

The object of the invention is achieved with a method for laser cleaning a surface with a laser device, wherein the laser device comprises a tube, wherein the tube comprises an inner cross-section, a laser opening and an extraction opening,
wherein the method comprising the steps of:
- directing a laser beam via a laser beam path to the surface, wherein the laser beam path extends from the inner cross-section to the laser opening,
- forming a gas flow path from the laser opening to the extraction opening through the inner cross-section,
- filling an inner volume of the tube extending across the inner cross-section with the laser beam,
- guiding gas along the gas flow path through the inner volume.

In an embodiment, the step of filling the inner volume further comprises the filling of the inner cross-section with the laser beam.

In an embodiment, the method further comprises the step of increasing a turbulence of the gas along the gas flow path.

In an embodiment, the method further comprises the step of filling the inner volume defined by the inner cross-section and a distance from the extraction opening to the laser opening. The distance between the extraction opening and the laser opening is at least 40 mm, preferable at least 50 mm, more preferably at least 60 mm.

In an embodiment, the method further comprises the steps of: removing metal particles from the surface, displacing the metal particles along with the gas along the gas flow path, and reducing the metal particles by heating and/or irradiating the metal particles with the laser head. The metal particles for example include Cr(VI) particles. The step of reducing the metal particles comprises reducing the Cr(VI) particles to create less hazardous Cr(III) particles.

In an embodiment, the method further comprises the step of adjusting an adjustable distance between the laser opening and the surface. In an embodiment, the adjustable distance between the laser opening and the surface is between 6-30 mm, preferably between 8-25 mm, more preferably between 15-20 mm.

In an embodiment, the step of filling the inner volume comprises filling the inner volume by scanning the laser beam.

In an embodiment, the method further comprises the step of generating a spectral signal based on a composition of the gas along the gas flow between the inner volume and the extraction opening.

In an embodiment, a computer program for use in the method according to the invention, the computer program having instructions which when executed cause the laser device to perform the step of: filling the inner volume with the laser beam.

In an embodiment, the computer program further has instructions which when executed cause the laser device to perform the step of setting a dimension of the inner volume based on a dimension of the inner cross-section.

In an embodiment, the computer program further has instructions which when executed cause the laser device to perform the step of adjusting of the inner volume based on information of a composition of gas flowing through the inner volume.

The invention will be described below with reference to some figures. These figures serve as examples to illustrate the invention and shall not be interpreted as limiting the scope of the claims. In the different figures, the same features are denoted by the same reference numerals. In the figures:
Fig. 1A: schematically represents a side view of a first embodiment of the laser device according to the invention;
Fig. 1B: schematically represents a front view of the first embodiment of the laser device according to the invention;
Fig. 1C: schematically represents a cross sectional top view across line A-A' of Fig. 1B;
Fig. 1D: schematically represents a gas flow path and turbulence of the first embodiment of the laser device according to the invention;
Fig. 2: schematically represents a section of the laser device according to a second embodiment of the invention during operation.

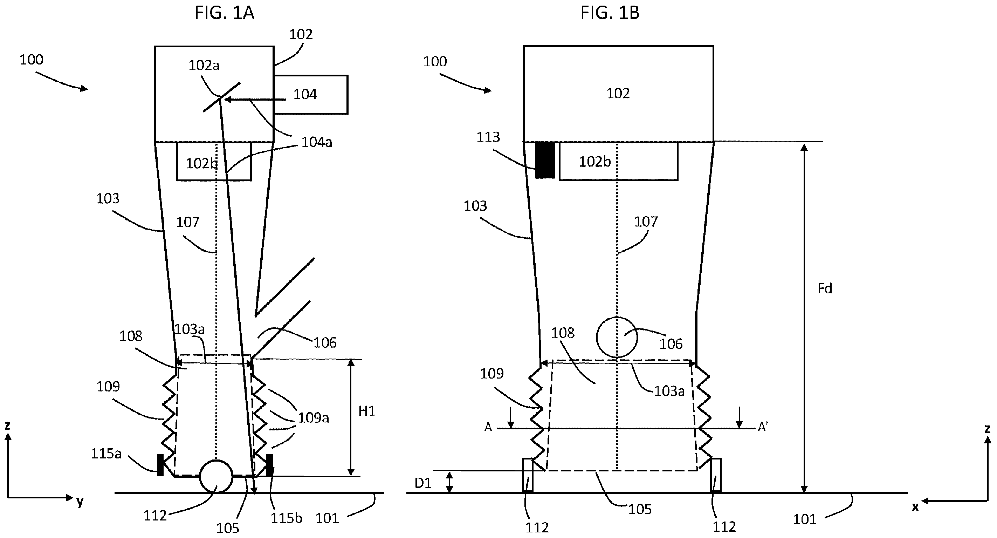

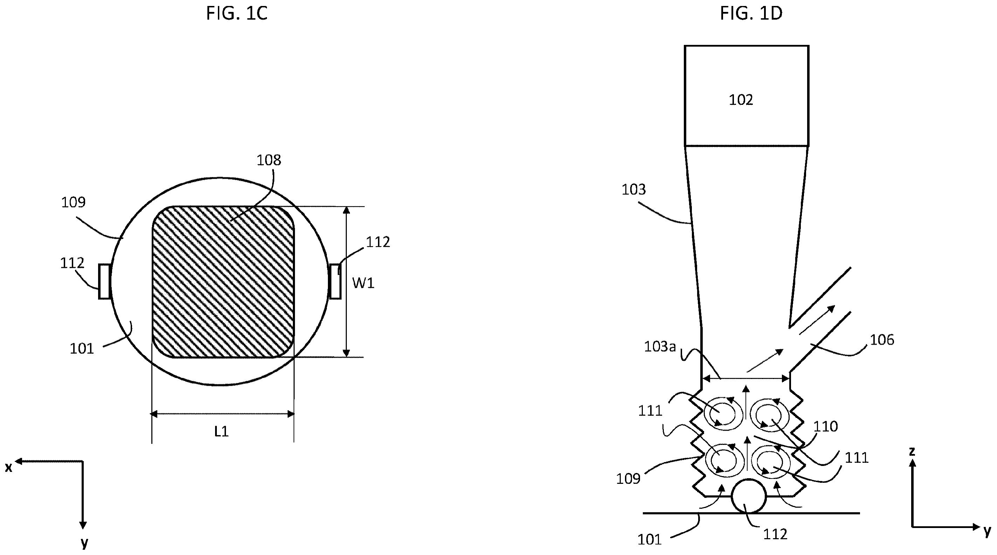

Figs. 1A-1D schematically represent a first embodiment of a laser device 100 according to the invention. Figs. 1A, 1D shows a side view, fig. 1B a front view and fig. 1C a top view. Figs. 1A-1D are depicted in a Cartesian coordinate system. For example, the laser device 100 is a laser cleaning device configured to clean a surface 101.

The laser device 100 comprises a laser head 102 and a tube 103. The laser head 102 comprises a laser source 104, which is configured to emit a laser beam 104a. Alternatively, the laser head is connectable to the laser source. The laser head 102 receives the laser beam 104a from the laser source 104. The laser source 104 is for instance configured to emit radiation in the infrared spectrum. The laser beam 104a for example comprises one or more laser beams, for instance in a predetermined shape, for instance a round or square laser beam. The laser head 102 comprises optical element 102a, such as a mirror system, to direct the laser beam 104a towards the surface 101.

The tube 103 comprises an inner cross-section 103a, a laser opening 105 and an extraction opening 106. Preferably, the inner cross-section 103a is equal or smaller than the laser opening 105. During the laser cleaning operation, the laser opening 105 is faced opposite to the surface 101 to be cleaned. The extraction opening 106 is for instance connected to a gas extraction system, e.g. a pump or compressor, which is configured to generate an underpressure at the extraction opening 106. The extraction opening 106 is configured to remove contaminants from the surface 101, wherein the contaminants are detached from the surface 101 by means of the laser beam 104a.

The laser head 102 is adapted to direct the laser beam 104a via a laser beam path 107 to the surface 101. The laser beam path 107 extends from the laser head 102 through the inner cross-section 130a to the laser opening 105. The laser beam path 107 is the trajectory the laser beam 104a travels through the tube 103. As an example, in Fig 1B the laser beam path 107 is set through the centre of the tube 103. However, the position of the laser beam path 107 can be changed during operation, e.g. during scanning of the surface.

The laser head 102 is adapted to fill an inner volume 108 extending across the inner cross-section 103a with the laser beam 104a. The inner volume 108 is indicated by the region defined by the dashed lines. The inner volume 108 defines the range inside the tube 103 within which the laser beam 104a is confined. Basically, the inner volume 108 corresponds to a heat corridor inside the tube 103 induced by the laser radiation heat. The tube 103 warms up by the emitted laser beam 104a.

The laser head 102 is adapted to fill the inner volume 108 with the laser beam 104a. Consequently, a laser radiation field is formed inside the tube 103. A released metal oxide particle from the surface 101 flows through the laser opening 105 to the extraction opening 106 via the inner cross section 103a. Under influence of the thermal effect induced by the laser radiation heat the oxidation state of the metal oxide particles is reduced to an oxidation state that has non-toxic properties or less toxic properties. For example, the oxidation state of the toxic hexavalent chromium is reduced to the trivalent oxidation state under the presence of high temperatures, e.g. temperatures of above 400 °C.

Further, visible in fig. 1D, the tube 103 forms a gas flow path 110 from the laser opening 105 to the extraction opening 106 through the inner cross-section 103a. The tube 103 guides gas, e.g. ambient air, along the gas flow path 110 through the inner volume 108. The gas, e.g. an air stream, enters the tube 103 at the laser opening 105 which is guided via the gas flow path 110 to the extraction opening 106. The gas flow rate or flux is for example regulated by adjusting the extraction rate at the extraction opening 106. Preferably, the gas flow rate is between 3000-5000 litres/min.

The tube 103 as visualised in figs. 1A-1D comprises a turbulator 109. The turbulator 109 is arranged between the laser opening 105 and the inner cross-section 103a. The turbulator 109 is adapted to increase a turbulence of the gas along the gas flow path 110. The turbulator 109 influences the gas flow path 110 by disturbing the gas flow field via the increased turbulence. The particles, e.g. metal oxide particles, flowing along the gas flow path 110 experience the turbulence. The turbulence results in the circulation of the particles inside the tube 103. The increased turbulence extends the residence time of the particles inside the tube 103. Extending the residence time increases the efficacy to sufficiently warm up the particles under influence of the laser beam 104a from the laser head 102. For example, in fig. 1D, vortices 111 are generated inside the turbulator 109. The zone of turbulence needs to be large enough to ensure sufficient circulation in the tube 103. Therefore, the turbulator 109 extends between the laser opening 105 and the extraction opening 106.

The turbulator 109 comprises ridges 109a arranged along the gas flow path 110. The ridges 109a are oriented towards the gas flow path 110. The flow of gas passes along the profile of the turbulator 109 causing turbulent flow field. When the particles displaced along the gas flow path 110 enters the turbulator 109 via the laser opening 105, the particles are not moving in a linear laminar flow towards the extraction opening 106. The particles, when subjected to the turbulent flow field, are generally making a spinning movement inside the turbulator 109. Hence, the hit chance of the radiation of the laser beam 104a incident on the surface of each particle is improved.

The extraction opening 106 is arranged at a distance H1 from the laser opening 105. The laser head 102 is adapted to fill the inner volume 108 defined by the inner cross-section 103a and the distance with the laser beam 104a. The inner volume 108 has a tapered shape. The turbulator 109 of the tube 103 has a substantially equal tapered shape as the inner volume 108. The safety distance between the inner volume 108 and a wall of the tube 103 is therefore as small as possible along the turbulator 109. The particles which are flowing through the turbulator 109 are less likely to escape from the inner volume 103 without being irradiated and/or heated by the laser beam 104a before the particles are extracted via the extraction opening 106.

The laser device 100 is configured to bring the laser beam 104a into focus at a focus distance Fd after leaving the laser head 102. By bringing the laser beam 104a into focus, e.g. by a lens 102b, the irradiation of the surface 101 is more efficient, e.g. during a cleaning operation. The distance H1 between the extraction opening 106 and the laser opening 105 depends on the focal distance Fd. The distance H1 has to be sufficient enough to form the turbulent flow field. The distance H1 between the extraction opening 106 and the laser opening 105 is at least 40 mm, preferable at least 50 mm, more preferably at least 60 mm.

The laser device 100 further comprises a distance adjuster 112. The distance adjuster 112 is configured to adjust an adjustable distance D1 between the laser opening 105 and the surface 101. The adjustable distance D1 ensures an advantageous gas flow in order to optimise the reduction of metal particles. The distance adjuster 112 is embodied as a pair of wheels arranged opposite to each other on the outside of the tube 103 near the laser opening 105 contacting the surface 101. The position perpendicular to the surface 101 of the pair of distance wheels 112 relative to the laser opening 105 is adjustable.

The adjustable distance D1 depends on the circumference of the laser opening 105 and the gas flow rate. In an embodiment, the adjustable distance D1 between the laser opening 105 and the surface 101 is between 6-30 mm, preferably between 8-25 mm, more preferably between 15-20 mm.

The laser device 100 further comprises a spectral sensor 113 (visible in fig. 1B). The spectral sensor 113 is arranged at the laser head 102 and oriented towards the surface 101. Since the laser head 102a irradiates the surface 101 with the laser beam 104a, the energy of the laser beam 104a causes an oxidation reaction near the surface 101. During this oxidation reaction, radiation is emitted from the surface 101. The spectral sensor 113 is configured to detect the emitted oxidation energy from the oxidation reaction. The detected emission contains information about the components involved in the oxidation reaction. These components include elements or particles from which the surface 101 is made, and other elements or particles present in or on the surface, for example an organic coating.

The spectral sensor 113 is arranged to generate a spectral signal. The spectral signal is based on a composition of the gas along the flow of gas between the inner volume 108 and the extraction opening 106. The spectral signal thus contains information about the amount and the oxidation state of the particles. The spectral sensor 113 is for example used to detect the presence of unremoved particles at the surface 101.

The laser device 100 further comprises two distance sensors 115a, 115b arranged opposite to each other near the laser opening 105 (see fig. 1A). The distance sensors 115a, 115b are configured to detect the adjustable distance D1 between the laser opening 105 and the surface 101. In another embodiment, the laser device 100 for example comprises one, three, four or more distance sensors.

The laser device 100 for example comprises a control unit (not shown) configured to receive a distance signal generated by the distance sensors 115a, 115b. The distance signal is representative of the adjustable distance D1 between the laser opening 105 and the surface 101. The control unit is configured to control the laser device 100 for emitting the laser beam 104a with a desired laser energy and/or laser frequency towards the surface 101.

For example, the laser device 100 is configured to emit a pulsed laser beam 104a with an energy between 1-200 mJ and a frequency between 1-60 kHz if the adjustable distance D1 is e.g. between 1-5 mm. The distance signal also prevents that a laser beam 104a is emitted when the laser device 100 is incorrectly positioned relative to the surface 101. Further, the adjustable distance D1 guarantees that the laser device 100 is configured to be operated as a Class 1 laser, which is safe under all conditions of normal use. This means that, for example, safety glasses are not needed during use.

Fig. 1C schematically represents a cross sectional top view across line A-A' of Fig. 1B. The cross section is taken through the turbulator 109. The laser head 102 is adapted to scan the surface 101 with the laser beam 104a by directing the laser beam 104a through a scanning pattern. The scanning pattern comprises, for instance, a relatively small scanning movement, which is hardly or not visible to the human eye. During scanning of the laser beam, the laser beam 104a for example follows a sinusoidal scanning movement. In this way, the laser beam 104a is not continuously on the same location of the surface 101, but makes a scanning movement. This ensures that not too much energy is transferred to a small part of the surface 101. For example, in a cleaning operation, too much energy could damage the surface 101 instead of removing contaminants.

The scanning pattern may be achieved by scanning the laser beam 104a back and forth over the surface 101 along a scanning width W1 and a scanning length L1. The scanning width W1 and the scanning length L1 defines a scanning area 120 on the surface 101. The scanning area 120 has a square-like shape with truncated corners. However, also other shapes are possible, e.g. circular, oval, rectangular etc. During scanning of the laser beam 104a over the scanning width W1 and/or the scanning length L1, the laser beam 104a does not directly contact a wall of the tube 103. This direct contact between the wall and the laser beam could heat up the tube 103 rapidly. This could even result in damage of the tube 103. In particular, the laser device 100 is for example a handheld device, and a relatively hot tube is experienced as cumbersome during operation. Therefore, the laser beam 104a stays within the boundary of the laser opening 105 when the laser beam 104a passes the laser opening 105. In the example, the laser opening 105 has a circular shape. In particular, the scanning width and the scanning length are determined with respect to the diameter of the laser opening 104a. Preferably, the scanning width W1 and the scanning length L1 are both smaller than the diameter of the laser opening 105.

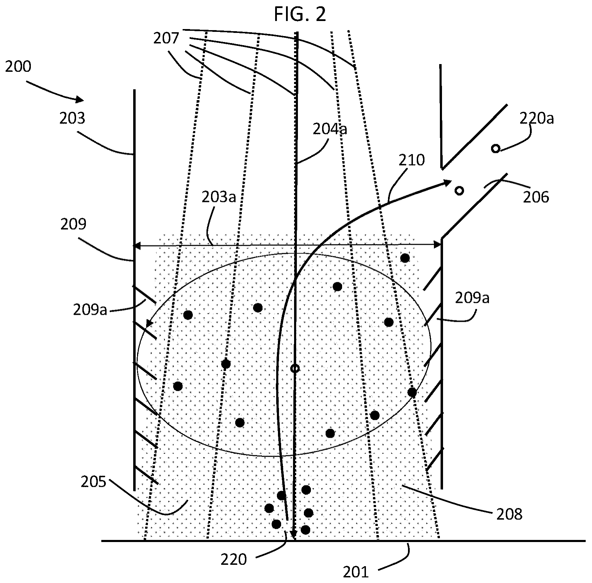

Fig. 2 schematically represents a section of a laser device 200 according to a second embodiment of the invention during operation. The second embodiment has, for example, the same features as the first embodiment, except for the following. The laser device 200 comprises a tube 203 comprising an inner cross-section 203a, a laser opening 205 and an extraction opening 206.

First, a laser beam 204a is directed via a laser beam path 207 to the surface 201. The laser beam path 207 extends from the inner cross-section 203a to the laser opening 205.

By irradiation of the surface 201 by the laser beam 204a, metal particles 220 are detached from the surface 201. The metal particles 220 for example include heavy metal oxide particles, for example hexavalent chromium particles. The surface 201 is e.g. a painted organic coating. The metal oxide particles 220 are bounded to organics or other elements.

The tube 203 is adapted to displace the detached metal particles 220 along a gas flow path 210. The gas flow path 210 is formed from the laser opening 205 to the extraction opening 206 through the inner cross-section 203a. The gas, e.g. an air stream, enters the tube 203 at the laser opening 205 which is guided via the gas flow path 210 to the extraction opening 206.

A turbulator 209 increases a turbulence of the gas along the gas flow path 210. The turbulator 209 influences the gas flow path 210 by disturbing the gas flow field via the increased turbulence. The turbulator 209 is arranged between the laser opening 205 and the inner cross-section 203a. The zone of turbulence needs to be large enough to ensure sufficient turbulence. Therefore, the turbulator extends between the laser opening 205 and the extraction opening 206. The turbulator 209 comprises protrusions 209a. The protrusions 209a are arranged along the gas flow path 210 and oriented towards the gas flow path 210. The flow of gas passes along the profile of the turbulator 209. This results in a turbulent flow field. The metal oxide particles 220 flowing along the gas flow path 210 will experience the turbulence. The particles 220, when subjected to the turbulent flow field, generally make a spinning movement inside the turbulator 209.

The increased turbulence extends the residence time of the particles 220 inside the tube 203. Extending the residence time increases the efficiency to sufficiently warm up the metal oxide particles 220 under influence of the laser beam 204a.

The laser device 200 is adapted to fill an inner volume of the tube 203 with the laser beam 204a. The inner volume 208 extends across the inner cross-section 203a and is visualised by the dotted region in fig. 2. By scanning the laser beam 204a the inner volume 208 is filled with the laser beam 204a. During scanning of the surface 201, e.g. by scanning the laser beam 204a back and forth over the surface 201, the position of the laser beam path 207 (indicated by the dotted lines) changes within the inner volume 208.

The displaced metal particles 220 circulating in the turbulator 209 are heated and/or irradiated by the laser beam 204a. Sufficient energy of the laser beam 204a causes the reduction of the particles 220 due to the thermal effect. For example, the reduction of Cr(VI) to less hazardous trivalent chromium is accomplished at high temperatures, e.g. at least 400 degrees. The scanning speed of the laser beam 204a over the surface 201 has to be high enough to secure a sufficient hit chance of the radiation of the laser beam 204a incident on each particle 220 inside the inner volume 208. For example, the scanning speed is in the range of 3000 - 5000 mm/s. This enhances the effectivity of irradiation of the particles 220, e.g. hexavalent chromium particles.

Subsequently, the particles 220 are extracted via the extraction opening 206. At least the oxidation states of a portion of the particles 220 are reduced. The reduced particles 220a (indicated by the open circles) are for example trivalent chromium particles, which are less hazardous that hexavalent chromium particles.

Further, this document describes the following clauses of the present invention:
1. Laser device for laser cleaning a surface, the laser device comprising:
   - a laser head, and
   - a tube comprising an inner cross-section, a laser opening and an extraction opening,

   wherein the laser head is adapted to direct a laser beam via a laser beam path to the surface,
   wherein the laser beam path extends from the laser head through the inner cross-section to the laser opening,
   wherein the tube forms a gas flow path from the laser opening to the extraction opening through the inner cross-section,
   wherein the laser head is adapted to fill an inner volume extending across the inner cross-section with the laser beam,
   wherein the tube is adapted to guide gas along the gas flow path through the inner volume.
2. Laser device according to clause 1, wherein the laser head is adapted to fill the inner cross-section with the laser beam.
3. Laser device according to any of the preceding clauses, wherein the tube comprises a turbulator adapted to increase a turbulence of the gas along the gas flow path.
4. Laser device according to clause 3, wherein the turbulator is arranged between the laser opening and the inner cross-section.
5. Laser device according to clause 3 or 4, wherein the turbulator comprises protrusions and/or ridges which are arranged along the gas flow path.
6. Laser device according to any of the preceding clauses, wherein the extraction opening is arranged at a distance from the laser opening, wherein the laser head is adapted to fill the inner volume defined by the inner cross-section and the distance.
7. Laser device according to clause 6, wherein the distance between the extraction opening and the laser opening is at least 40 mm, preferable at least 50 mm, more preferably at least 60 mm.
8. Laser device according to any of the preceding clauses, wherein the inner volume has a tapered shape.
9. Laser device according to any of the preceding clauses, wherein the laser device is adapted to remove metal particles from the surface, wherein the tube is adapted to displace the metal particles along the gas flow path, and wherein the laser head is adapted to heat and/or irradiate the metal particles in the inner volume to reduce an oxidation state the metal particles.
10. Laser device according to clause 9, wherein the metal particles include hexavalent chromium particles, wherein the laser head is adapted to heat and/or irradiate the hexavalent chromium particles in the inner volume to create trivalent chromium particles.
11. Laser device according to any of the preceding clauses, wherein the laser device comprises a distance adjuster to adjust an adjustable distance between the laser opening and the surface.
12. Laser device according to clause 11, wherein the adjustable distance between the laser opening and the surface is between 6-30 mm, preferably between 8-25 mm, more preferably between 15-20 mm.
13. Laser device according to any of the preceding clauses, wherein the laser device further comprises a gas extraction system which is connectable to the extraction opening, wherein the gas extraction system is adapted to create a flow of the gas along the gas flow path.
14. Laser device according to any of the preceding clauses, wherein the laser device comprises a spectral sensor arranged to generate a spectral signal based on a composition of the gas along the gas flow between the inner volume and the extraction opening.
15. Laser device according to any of the preceding clauses, wherein the laser device further comprises at least one distance sensor to generate a distance signal based on the adjustable distance between the laser opening and the surface.
16.Laser device according to any of the preceding clauses, wherein the laser head is adapted to scan the surface with the laser beam, wherein the laser head is adapted to fill the inner volume by scanning the laser beam.
17. Method for laser cleaning a surface with a laser device, wherein the laser device comprises a tube, wherein the tube comprises an inner cross-section, a laser opening and an extraction opening,
   wherein the method comprising the steps of:
   - directing a laser beam via a laser beam path to the surface, wherein the laser beam path extends from the inner cross-section to the laser opening,
   - forming a gas flow path from the laser opening to the extraction opening through the inner cross-section,
   - filling an inner volume of the tube extending across the inner cross-section with the laser beam,
   - guiding gas along the gas flow path through the inner volume.
18. Method according to clause 17, wherein the step of filling the inner volume further comprises the filling of the inner cross-section with the laser beam.
19. Method according to clause 17 or 18, comprising the step of:
   increasing a turbulence of the gas along the gas flow path.
20. Method according to any of the preceding clauses 17-19, comprising the step of:
   filling the inner volume defined by the inner cross-section and a distance from the extraction opening to the laser opening.
21. Method according to clause 20, wherein the distance between the extraction opening and the laser opening is at least 40 mm, preferable at least 50 mm, more preferably at least 60 mm.
22. Method according to any of the preceding clauses 17-21, wherein the method comprises the steps of
   removing metal particles from the surface,
   displacing the metal particles along with the gas along the gas flow path, and reducing the metal particles by heating and/or irradiating the metal particles with the laser head.
23. Method according to clause 22, wherein the metal particles include hexavalent chromium particles, wherein the step of reducing the metal particles comprises reducing the hexavalent chromium particles to create trivalent chromium particles.
24. Method according to any of the preceding clauses 17-23, wherein the method further comprises the step of:
   - adjusting an adjustable distance between the laser opening and the surface.
25. Method according to clause 24, wherein the adjustable distance between the laser opening and the surface is between 6-30 mm, preferably between 8-25 mm, more preferably between 15-20 mm.
26. Method according to any of the preceding clauses 17-25, wherein the step of filling the inner volume comprises filling the inner volume by scanning the laser beam.
27. Method according to any of the preceding clauses 17-26, wherein the method further comprises the step of:
   - generating a spectral signal based on a composition of the gas along the flow of gas between the inner volume and the extraction opening.
28. Computer program for use in the method according to any of the preceding clauses 17-27, the computer program having instructions which when executed cause the laser device to perform the step of:
   - filling the inner volume with the laser beam.
29. Computer program according to clause 28, wherein the computer program has instructions which when executed cause the laser device to perform the step of:
   - setting a dimension of the inner volume based on a dimension of the inner cross-section.
30. Computer program according to clause 28 or 29, wherein the computer program has instructions which when executed cause the laser device to perform the step of:
   adjusting of the inner volume based on information of a composition of gas flowing through the inner volume.

## Claims

1. Laser device (100, 200) for laser cleaning a surface (101, 201), the laser device comprising:
• a laser head (102), and
• a tube (103, 203) comprising an inner cross-section (103a, 203a), a laser opening (105, 205) and an extraction opening (106, 206),
wherein the laser head is adapted to direct a laser beam (104a, 204a) via a laser beam path (107, 207) to the surface,
wherein the laser beam path extends from the laser head through the inner cross-section to the laser opening,
wherein the tube forms a gas flow path (110, 210) from the laser opening to the extraction opening through the inner cross-section,
wherein the laser head is adapted to fill an inner volume (108, 208) extending across the inner cross-section with the laser beam,
wherein the tube is adapted to guide gas along the gas flow path through the inner volume,
wherein the laser device is adapted to remove metal particles (220) from the surface, wherein the tube is adapted to displace the metal particles along the gas flow path, and wherein the laser head is adapted to heat and/or irradiate the metal particles in the inner volume to reduce an oxidation state of the metal particles.

2. Laser device according to claim 1, wherein the metal particles include hexavalent chromium particles, wherein the laser head is adapted to heat and/or irradiate the hexavalent chromium particles in the inner volume to create trivalent chromium particles.

3. Laser device according to any one of the preceding claims, wherein the laser head is adapted to fill the inner cross-section with the laser beam.

4. Laser device according to any of the preceding claims, wherein the tube comprises a turbulator (109, 209) adapted to increase a turbulence of the gas along the gas flow path.

5. Laser device according to any of the preceding claims, wherein the extraction opening is arranged at a distance (H1) from the laser opening, wherein the laser head is adapted to fill the inner volume defined by the inner cross-section and the distance.

6. Laser device according to any of the preceding claims, wherein the inner volume has a tapered shape.

7. Laser device according to any of the preceding claims, wherein the laser device further comprises a gas extraction system which is connectable to the extraction opening, wherein the gas extraction system is adapted to create a flow of the gas along the gas flow path.

8. Laser device according to any of the preceding claims, wherein the laser head is adapted to scan the surface with the laser beam, wherein the laser head is adapted to fill the inner volume by scanning the laser beam.

9. Method for laser cleaning a surface (101, 201) with a laser device (100, 200), wherein the laser device comprises a tube (103, 203), wherein the tube comprises an inner cross-section (103a, 203a), a laser opening (105, 205) and an extraction opening (106, 206),
wherein the method comprising the steps of:
• directing a laser beam (104a, 204a) via a laser beam path (107, 207) to the surface, wherein the laser beam path extends from the inner cross-section to the laser opening,
• forming a gas flow path (110, 210) from the laser opening to the extraction opening through the inner cross-section,
• filling an inner volume (108, 208) of the tube extending across the inner cross-section with the laser beam,
• guiding gas along the gas flow path through the inner volume,
• removing metal particles (220) from the surface,
• displacing the metal particles along with the gas along the gas flow path, and reducing the metal particles by heating and/or irradiating the metal particles with the laser head.

10. Method according to claim 9, wherein the metal particles include hexavalent chromium particles, wherein the step of reducing the metal particles comprises reducing the hexavalent chromium particles to create trivalent chromium particles.

11. Method according to claim 9 or claim 10, wherein the step of filling the inner volume further comprises the filling of the inner cross-section with the laser beam.

12. Method according to any of the preceding claims 9-11, comprising the step of: increasing a turbulence of the gas along the gas flow path.

13. Method according to any of the preceding claims 9-12, comprising the step of:
filling the inner volume defined by the inner cross-section and a distance from the extraction opening to the laser opening.

14. Method according to any of the preceding claims 9-13, wherein the step of filling the inner volume comprises filling the inner volume by scanning the laser beam.

15. Computer program for use in the method according to any of the preceding claims 9-14, the computer program having instructions which when executed cause the laser device to perform the step of:
• filling the inner volume with the laser beam.
